# EUROPEAN PATENT APPLICATION

(11) **EP 4 700 327 A1**
(43) Date of publication of application: **25.02.2026**
(21) Application number: 24195294.4
(22) Date of filing: 20.08.2024
(51) Int. Cl.: G01B 11/24, G01N 21/954

(54) **INSPECTION SYSTEM FOR INSPECTING INTERIOR SURFACES OF A CYLINDER OF A FOUR-STROKE ENGINE AND METHOD OF USING THE INSPECTION SYSTEM**

(71) Applicant: Hinnerskov, Gustav Villarruel, 4180 Sorø (DK)
(72) Inventor: Hinnerskov, Gustav Villarruel, 4180 Sorø (DK)
(74) Representative: Holme Patent A/S

(57) **Abstract**

An inspection system (14) is configured for inspecting an interior wall of a cylinder liner (13) of a cylinder (1) of a four-stroke engine. The inspection system (14) comprises an inspection tool. The inspection tool has an elongated member (15) arranged reciprocatingly along a lengthwise axis of the cylinder (1) between a cylinder head cover (10) of the cylinder (1), reciprocating means configured to reciprocate the elongated member (15), and rotation means configured to rotate the elongated member (15) about is longitudinal axis. The elongated member (15) is configured for being arranged with a free end (17) outside a cylinder head cover (10) of a cylinder (1) of the four-stroke engine, and an opposite inspection end (15a) inside said cylinder (1), and the inspection end (15a) is provided with a 3D scanner means (18) to retrieve a scan of the surface of the interior wall (19) of the cylinder (1).

## Description

The present invention relates to an inspection system and a method of using said system, e.g. for inspecting a cylinder liner of a four-stroke engine with a reciprocating piston.

Cylinder liners in engines serve several essential functions, a.o. they provide a smooth, wear-resistant surface for pistons, ensure proper sealing, assist in heat dissipation, and contribute to engine longevity and efficiency.

Cylinder liners provide a smooth sliding surface for the piston's reciprocating motion. The friction resistance on the interior walls of the liner is minimal, allowing piston rings to glide smoothly along its surface. A thin lubricating film forms on the liner's interior surface, further reducing frictional resistance. Without the presence of a cylinder liner, the piston rings would directly contact the cylinder block. In such a scenario, the wear on the cylinder block would be considerably higher, making it more cost-effective to replace the cylinder liner than the entire block. Galling, a form of wear caused by adhesion forces between mating parts, is mitigated by the liner's presence.

Cylinder liners also play an important role in maintaining a tight seal between the piston rings and the liner walls. This sealing function relies on the exceptional smoothness of the interior cylinder walls. As a result, it minimises charge leakage during the compression stroke and prevents the escape of exhaust gases during the exhaust stroke.

Large marine diesel engines often use cylinder liners to withstand the high loads and corrosive conditions encountered at sea. Liners help extend the service life of marine engines and simplify maintenance.

Without cylinder liners, the engine's cylinder block would be vulnerable to damage caused by the intense heat and pressure generated during combustion. Internal combustion engines operate under extreme conditions, generating high pressure and temperature levels. Cylinder liners are designed to withstand these harsh conditions, enduring temperatures as high as 2500 degrees Celsius and pressures of up to 25 bars.

Although the cylinder liner shall protect the cylinder bore, to prolong cylinder bore life time, over time the cylinder liner can wear, develop imperfections, and be exposed for deposits, whereby its properties degrade.

Accordingly, cylinder liner walls must be inspected frequently.

Complete inspection of cylinder liners on four-stroke engines, on e.g. ships, typically requires all components to be removed from the engine and fully dismantled while not at sea. This is expensive and time consuming, and involves a lot of downtime. Moreover the cylinder liner cannot be inspected during sailing.

The inspection reveals fouling rates, areas of concern such as very dirty liner wall, potential excess wear on liner wall due to insufficient lubrication oil, abrasives in the fuel, or liner being too cool, cracks on liner wall due to fuel impingement, e.g. fuel injector fault or fuel oil too cold, deposits on liner, etc., and undertakes gauging, and other various measurements.

Inspections systems for cylinder liners of two-stroke engines are known from e.g. WO2009152851 and WO2015193010. These known systems are of the kind that needs to be placed on top of the piston and requires external displacements means, e.g. robes etc., for being moved along the central axis of the cylinder liner during operation. These known inspection tools are introduced into the cylinder liner through one of the scavenging air ports and lie onto the upper surface area of the piston, and are moved up and down by the piston.

The applicant's European patent no. EP3693695 B1 concerns an inspection system adapted for two-stroke engines. An inspection tool is introduced into the cylinder liner through one of the scavenging air ports, and has a self-propelled vehicle for its movement along the length/height of the cylinder liner for a measuring device to provide measurements along the entire surface of the cylinder liner. The self-propelled vehicle is a vehicle capable of converting its own energy supply into motive power used for propulsion, thus it does not require any additional assistance, such as the piston, for being moved axially. An electric rotational motor is arranged for rotating the measuring device of the inspection tool while the measurements are performed, thereby ensuring that the measuring device detects/measures/scans the interior surface of the cylinder liner in a spiralling movement while the self-propelled vehicle travels upwards or downwards within the cylinder liner. The measuring device requires some kind of a probe/sensor, such as a proximity sensor, and/or a camera to inspect/scan the interior surface of the cylinder liner.

US 2017/0097306 discloses a device for examining interior walls of a cylinder bore in an engine block. The device has a holding means for holding the hollow body, a rod-shaped camera device which is designed to record an image transversely to a longitudinal axis of the rod-shaped camera device, an adjustment means for moving the camera device into and out of the hollow body and rotates the camera device around the longitudinal axis between the different image recordings. An illumination means serves for illuminating the interior walls of the hollow body for the camera device to record a panoramic image around the longitudinal axis of the rod-shaped camera device to determine surface properties of the interior walls from image data recorded by the camera device. The adjustment means records a plurality of images one after the other, which are then put together by an electronic control and evaluation means to provide a single panoramic image. The illumination means includes two kind of light sources, one being a grazing light illumination device formed as a ring light which is arranged centred relative to the rod-shaped camera device with a ring area perpendicular to the longitudinal direction of the rod-shaped camera device. The grazing light illumination device can comprise a plurality of light sources, for example at least 4 or 8 light sources, which are arranged around a ring shape.

To create a 3D model using photogrammetry together with grazing light as in US 2017/0097306, photos are taken from a variety of angles to capture every part of the subject with overlap from picture to picture. This overlap is necessary for the software to align the photos appropriately. Once all of the images are taken, they'll be imported into the photogrammetry software, which aligns the pictures, plot data points, and calculates the distance and location of each point in the 3D space. The result is a 3D point cloud that can create a polygonal mesh, resembling but not being a 3D scanning.

One disadvantage of using grazing light in photogrammetry is that it is extremely difficult to get a return off some material surface as it requires vast amounts of incident light and applies only a very narrow beam light sources from the closest distance to the intended surface.

Yet a disadvantage is that if there are to be items with significant depth sticking off the cylinder liner wall, it's easy to get a bad result from not hitting the fronts of those items with grazing light, but only their tops.

Thus when using this known scanning method texture plays a big part in how the reference points are made, working with smooth, flat, or solid-colored surfaces can be difficult. Further the calculation of grazing is very difficult as the cosine of the incident angle falls off very rapidly when leaving the source. Furthermore photogrammetry can sometimes involve long processing time as well, which will result in long down time of cylinders.

Yet a disadvantage of this known scanning technique is that the precision is not good enough, typically ± 5 mm.

Accordingly it is an aspect of the present invention to provide an alternative cylinder liner inspection system, in particular an alternative cylinder liner inspection system for a four stroke engine.

It is a further aspect of the present invention to provide a cylinder liner inspection system that can be operated while other cylinders of a four stroke engine are in operation.

It is a further aspect of the present invention to provide a cylinder liner inspection system that does not require substantial dismantling of the cylinder.

It is a further aspect of the present invention to provide a cylinder liner inspection system that can provide more reliable data of the condition of at least the interior cylinder liner wall than hitherto known.

It is a further aspect of the present invention to provide a cylinder liner inspection system that can operate fast and efficiently.

It is a further aspect of the present invention to provide a cylinder liner inspection system that can be custom-fitted for use with various cylinders and cylinder liners.

It is a further aspect of the present invention to provide a cylinder liner inspection system that can work in both vertically, horizontally, and angularly arranged cylinders, such as a V-engine having e.g. an angle between cylinder banks of between 20 - 30°.

The novel and unique features whereby these and other aspects can be achieved according to the present invention consist in that the inspection system, which is configured for inspecting an interior wall of a cylinder liner of a cylinder of a four-stroke engine comprises an inspection tool, which inspection tool has
- an elongated member arranged reciprocatingly along a lengthwise axis of the cylinder between a cylinder head cover of the cylinder,
- reciprocating means configured to reciprocate the elongated member,
- rotation means configured to rotate the elongated member about is longitudinal axis,
- which elongated member is configured for being arranged with a free end outside a cylinder head cover of a cylinder of the four-stroke engine, and an opposite inspection end inside said cylinder, and
- the inspection end is provided with a 3D scanner means to retrieve a scan of at least a part of the surface of the interior wall of the cylinder.

The elongated member can be any kind of rod, pipe or similar simple structure, provided it can carry the 3D scanner means at its inspection end.

The reciprocating means and the rotation means can be any motor means, e.g. an electric motor that can easily be brought along for use on site next to the four stroke engine.

The cameras used in the photogrammetry systems discussed above are not optically calibrated for 3D scanning. This can create critical scaling errors in the photoscan. Furthermore, processing large scans with many pictures can take really long time. In contrast thereto true 3D scanners are calibrated for scanning, which makes them not only predictable but also and very accurate.

Although it is possible to add more images to a photoscan of the known the photogrammetry systems the whole model needs to be processed every time. So another great advantage of using a true 3D scanner its use makes it possible to actually see what happens in real time, as well as the scan can be recorded and looked over later. This makes the use of 3D scanning as an inspections process for cylinder liners of a four stroke engine significantly faster than when using photogrammetry, whereby a cylinder need only be taken temporarily out of operation for a short while.

The 3D scanning of the 3D scanner means of the present invention provides a dense cloud capture of surfaces with little texture such as the cylinder liner.

In 3D scanning the most common techniques are laser and white light 3D scanning. Laser scanning uses a laser to measure an object's geometry and create the model through the data obtained. The laser beam is swept across the surface, and the device uses angle encoders of the beam projector and the return "time-of-flight" to calculate the location of each point in 3D space. Once all of the points are captured and recorded, a dense point cloud results. To capture a complete object, the laser scanner is moved, and the scan repeated. Optionally, additional software can connect the points to create a polygonal mesh for 3D modelling and design purposes.

White light 3D scanning utilizes a projector (often LCD) and one or more cameras to map an area or object. Light patterns are projected onto the surface, and the camera then records the surface by measuring where and how the light deforms around it. To ensure every angle is captured, the scanner is moved around inside the object. The result is a point cloud similar to what laser 3D scanning produces, with the same option of producing a polygonal mesh.

The 3D scanner means particular suitable for the present invention may preferably have a High Precision 3D sensor configured for measuring the distance between the sensor and a target point by point to obtain high solution representations of the surface of the interior cylinder liner wall.

Preferably the High Precision 3D sensor can include at least one sensor selected from the group of sensors comprising a Laser Displacement Sensor, an Inductive/Eddy current sensor, a Confonical light sensor, and an Ultrasonic sensor all of which are non-contacting sensors.

Preferably the accuracy of the preferred High Precision 3D sensor is ± 5 µm.

The term "precision" refers to the repeatability, or consistency, of a measurement. It is possible to have a very precise measurement without scatter (or noise) that is repeatable and would be considered precise (repeatable), although it can be inaccurate because of an instrument error.

For example, the 3D scanner means may be out of calibration and produce inaccurate but consistent (Precise) results.

The resolution of the 3D scanner means is the number of points that can be measured on a surface. Thus the 3D scanner means is a 3D imaging device that is able of capturing a high number of points per second or points per unit of area, thereby yielding a very higher resolution. The higher the resolution the more points are put onto a surface and into the point cloud.

Preferred range of resolution for the present invention may e.g. be about 25.000 - 50.000 point per cylinder liner. Such resolution can be obtained by 128 point per 360° rotation of the 3D scanner means, and about 300 rotations of the 3D scanner means per stroke or liner depth.

Within the scope of the present invention this exemplary range can be selected in accordance with the very cylinder liner to be inspected. E.g. a first inspection may have a lower resolution to initially reveal problematic areas, which are detailed inspected in a second round of inspection with a higher resolution. This may e.g. e the case if a thourough inspection has taken place recently, or if the cylinder liner has heavy damages that can be confirmed easily. Thus the present invention may encompass resolution ranges outside the resolution range mentioned above, also if a specific engine requires deviations therefrom.

The Laser Displacement Sensor enables non-contact measurement of a target's height, position, or distance. By pairing multiple sensors, measurements such as thickness and width can also be performed. High-accuracy displacement sensors can be grouped into two categories: confocal and laser triangulation. Both provide accurate, reliable solutions for non-contact measurement.

The Inductive Sensors (eddy current) is designed for non-contact measurement of displacement, distance, position, oscillation and vibrations. They are particularly suitable when high precision is required in harsh industrial environments (pressure, dirt, temperature).

Laser Distance Sensors (Time of Flight) work according to the principle of transit time measurement. They are high-performance distance sensors that accurately determine distance between the sensor and the object on the basis of transit time measurement. The speed of the laser light is known very precisely, so it is simple to determine how far away the target point is. These systems use circuitry that is accurate to picoseconds to measure the time it takes for millions of laser pulses to return to the sensor and calculates the distance to said target point.

Confocal imaging demands illumination of a single spot as tiny as possible to make position or thickness measurement. Sensors based on confocal light imaging can accurately measure on curved, uneven, or even rough surfaces.

An optical sensor has a transmitter and receiver, whereas an ultrasonic sensor uses a single ultrasonic element for both emission and reception. Ultrasonic Sensors measure the distance from the ultrasonic sensor head that emits an ultrasonic wave to the target by measuring the time between the emission and reception of wave reflected back from the target. For example for a reflective model ultrasonic sensor, a single oscillator emits and receives ultrasonic waves alternately.

The photogrammatry system of US 2017/0097306 it intended for use in any bores, and does not particularly address the issues of how to insert all of the rod-shaped camera, the light source, the grazing light source from the top of the cylinder. It must be assumed that in the absence of other teaching that US 2017/0097306 will remove the cylinder head cover as teached in other known cylinders of internal combustion engines and replace said cylinder head cover with a top cover especially adapted to hold the rod-shaped camera, the light source, the grazing light source. This is however complicated, time-consuming and expensive, not least because such a top cover must be custom-fitted for each kind of cylinders.

These disadvantages are remedied by the present invention in that the 3D scanner means as the inspection end of the elongated member that carry the 3D scanner means simply can be inserted through a fuel injection port in a cylinder head cover of the cylinder of the four-stroke engine after having removed the spark plug in said fuel injection port of the cylinder head cover.

Any difference in diameter of the spark plug opening and the diameter of the elongated member with the 3D scanner means can simply be balanced by means of a slide bushing means inserted into the fuel injection port subsequent to having removed the spark plug in the fuel injection port in the cylinder head cover, which slide bushing means keeps the elongated member aligned with the central axis of the cylinder liner, optionally coaxially aligned, and provides for a smooth reciprocation and rotation of the elongated member between a top dead centre (TDC) and a bottom dead centre (BDC) of the piston, so that a high quality scan can be obtained and vibrations and oscillations due to friction is eliminated.

As an alternative to a slide bushing means and a sliding elongated member, a threaded bushing can be inserted into the spark plug opening to co-operate with a threaded elongated member. In such an embodiment of the inspection tool of the present invention the rotation means are also the reciprocating means, as reciprocation of the threaded elongated member inherent takes place when the threaded elongated member is rotated in clockwise or counter-clockwise. The thread pitch may be selected in accordance with the distance the 3D scanner means shall move vertically during one rotation. Such embodiments would be especially practical when inspection small four-stroke engines.

The spark plug is already designed for being removed, so the present invention utilizes and existing opening in the cylinder head cover for inserting the elongated member, and the cylinder head cover need not to be removed beforehand.

As the 3D scanner means can be reciprocatingly arranged inside the cylinder, preferably being able to reciprocate between a top dead centre and a bottom dead centre of the piston inside the cylinder liner, the entire surface of the interior wall of the cylinder liner can be inspected, as well as the top surface of the piston.

The 3D scanner means of the present invention is capable of detecting the distance to a target, 1 point at the time, at a speed of at least 1000 detections per second to this way obtain immediate representation of the surface of interest.

Various cylinder liners may have different depths. To resolve this issue and make the inspection system to be fitable to cylinder liners of various heights the elongated members may be extendable, e.g. telescopically extendable, with the further inherent advantage that the inspection system will not take up much space when not in use.

It is of course understood that the inspection system of the present invention has computational means. Once a sensor of the 3D scanner means has picked up a signal representing the distance between the target point on the interior cylinder liner wall and the sensor, e.g. laser light reflected off the cylinder liner wall, the computational means may calculate the distance from the cylinder liner wall to the sensor, e.g. using trigonometric triangulation, or in time-of-flight determinations determining distance to target points based on known speed of laser light.

The inspection system of the present invention may advantageously comprise computational means provided with 3D scanning software Preferably the computational means is integral with the 3D scanner means or is an external computer that receives data acquired by the operating the 3D scanner means and being transmitted from the 3D scanner means to the computational means.

The 3D scanning software may be part of the 3D scanner means or be stored on an external computer and be executable by the computational means to provide a representation in real-time of the scanned surface.

Can be integral with the 3D scanner means, or be an external computer that receives data acquired by operating the 3D scanner means, and being transmitted from the 3D scanner means to the computational means.

The inspection system may further comprise a monitor configured to display a representation of the surface topography of the interior cylinder liner wall in real time.

In a preferred embodiment the 3D scanner means can be suspended to the elongated member to be angular orientable towards any interior part or area of the cylinder liner, piston or head cover, or components facing inside said cylinder liner to thereby enable scanning for a burned piston, such a revealing a melted appearance, a hole burned completely through the top of the piston, carbon deposits on the top of the piston that may cause detonations, defects at the spark plug opening, and/or. This list of potential defects of the cylinder discloses examples only and should not be construed as limiting.

The present invention further relates to a method of inspecting an interior wall of a cylinder liner of a cylinder of a four-stroke engine

The method comprises the steps of
a) Providing the inspection system (14) according to any of the preceding claims,
b) Arranging a piston of the cylinder at or above its bottom dead centre,
c) Removing a spark plug of the cylinder from its spark plug opening,
d) Inserting the inspection tool through the spark plug opening,
e) Activating the 3D scanner means, the reciprocating means and the rotation means and scanning one or more of at least a part of the interior wall of the cylinder liner, at least a part of the top surface of the piston, and any part of the cylinder head cover facing the piston, including any components secured to or at the cylinder head cover and facing inside the cylinder liner, and
f) Transmitting data obtained by the 3D scanner means from the 3D scanner means to the computational means.

Thereby can highly accurate representations of the interior surface of the cylinder liner wall and any other part of the interior components of the cylinder be computed.

The method may advantageously comprise a step c1) between step c) and step d) of inserting a slide bushing means in the spark plug opening for keeping the elongated member aligned with the central axis of the cylinder liner, optionally coaxially aligned.

An exemplary embodiment of the invention will be described in further details below with references to the drawing in which:
Fig. 1 is a schematic illustration of a cylinder liner of a four stroke engine, and
Fig. 2 is a schematic illustration of the same provided with an inspection system according to the present invention.

Fig. 1 engine. The cylinder 1 has a crankcase 2 with a crankshaft 3, which is connected to a piston 4 via a connecting rod 5. An intake port 6 with an intake valve 7, and an exhaust port 8 with an exhaust valve 9 is provided in the cylinder head cover 10 opposite the crankcase 2. A spark plug opening 11 with a spark plug 12 is provided in the cylinder head cover 10. A cylinder liner 13 lines the interior side of the stroke path of the cylinder 1.

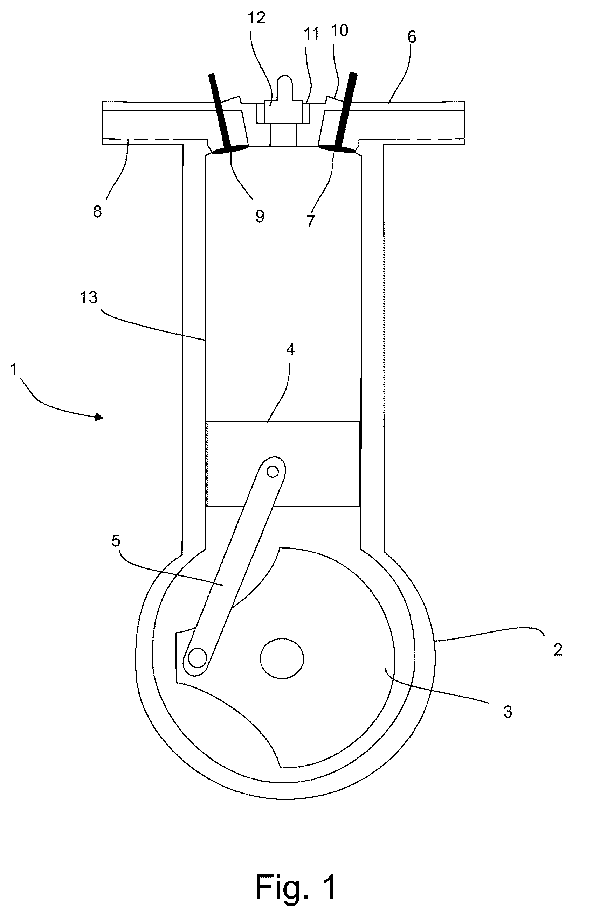

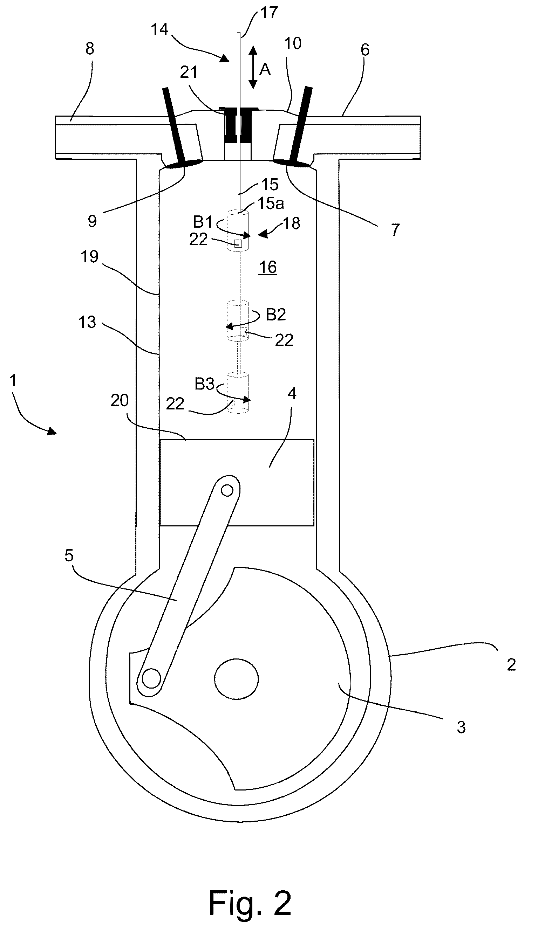

In the illustration of Fig. 2 the spark plug 12 has been taken out of the spark plug opening 11, thus out of the fuel injection port 11.

Instead the cylinder 1 has been equipped with the inspection system 14 of the present invention.

Emphasise is made that when using the inspection system 14 of the present invention the inspected cylinder is out of operation, however the three other cylinder may still be operative. Further it should be noted that the piston 4 is in its lowermost position when the inspection system 14 is used.

The inspection system 14 has an elongated member 15, in form of a rod 15 that extends axially inside the cylinder 1. The elongated member 15 has an inspection end 15a inserted into the bore 16 or the cylinder liner 13 and an opposite free end 17 outside the bore 16. The inspection end 15a is provided with a 3D scanner means 18 arranged for scanning the interior wall surface 19 of cylinder liner 13 and top face 20 of piston 4.

In fig. 2 the spark plug 12 has been removed and a slide bushing means 21 has been inserted. The elongated member 15, in form of a rod 15, extends trough the slide bushing means 21 to reciprocate axially as indicated by double arrow A up and down, actuated by reciprocating means (not shown), inside the bore 16. At the same time and continuously or in fixed axial positions, the elongated member 15 is also rotated, actuated by rotation means (not shown), about its longitudinal axis.

The combination of a translatory movement and a rotational movement enables a full 3D scan of the interior wall surface of cylinder liner and of the top face of the piston between TDC and BDC.

In fig. 3 the 3D scanner means 18 is, as an example, shown in an upper position corresponding close to TDC, as indicated by Arrow B1, a middle position about midway of the stroke path, as indicated by Arrow B2, and a lower position corresponding close to BDC, as indicated by Arrow B2.

An illustration of a sensor of the 3D scanner means 18 is indicated at reference numeral 22, and as illustrated by arrows B1, B2, B3 the sensor position changes as it rotates when the rod 15 is rotated, and as shown with double arrow A1, the sensor 22 moves along the axis of the cylinder 1 as well.

The inspection system of the present invention can be used to inspect both vertical and horizontal cylinders if needed. In fact any kind of cylinder can be inspected, but the huge advantages are apparent for the cylinders of a four-stroke engine.

## Claims

1. An inspection system (14) configured for inspecting an interior wall of a cylinder liner (13) of a cylinder (1) of a four-stroke engine with a reciprocating piston (4), the inspection system (14) comprises an inspection tool, which inspection tool has
- a elongated member (15) arranged reciprocatingly along a lengthwise axis of the cylinder (1) between a cylinder head cover (10) of the cylinder (1),
- reciprocating means configured to reciprocate the elongated member (15),
- rotation means configured to rotate the elongated member (15) about is longitudinal axis,
- which elongated member (15) is configured for being arranged with a free end (17) outside a cylinder head cover (10) of a cylinder (1) of the four-stroke engine, and an opposite inspection end (15a) inside said cylinder(1), and
- the inspection end (15a) is provided with a 3D scanner means (18) to retrieve a scan of at least a part of the surface of the interior wall (19) of the cylinder (1).

2. An inspection system (14) according to claim 1, wherein the 3D scanner means (18) has at least one High Precision 3D sensor (22) configured for measuring the distance, point by point, between the at least one High Precision 3D sensor (22) and a target point.

3. An inspection system (14) according to claim 2, wherein the at least one High Precision 3D sensor (22) is selected from the group of sensors comprising a Laser Displacement Sensor, an Inductive/Eddy current sensor, a Confonical light sensor, and an Ultrasonic sensor.

4. An inspection system (14) according to any of claims 2 or 3, wherein the at least one High Precision 3D sensor (22) has a precision of ± 5 µm.

5. An inspection system (14) according to any of the preceding claims, wherein the elongated member (15) is inserted through a fuel injection port (11) in a cylinder head cover (10) of the cylinder (1) of the four-stroke engine after having removed a spark plug (12) in the fuel injection port (11) in the cylinder head cover (10).

6. An inspection system (14) according to claim 5, further comprising a slide bushing means (21) configured for being insertable into the fuel injection port (11) subsequent to having removed the spark plug (12).

7. An inspection system (14) according to any of the preceding claims, wherein the 3D scanner means (18) is reciprocatingly arranged inside the cylinder (1), preferably being able to reciprocate between a top dead centre (TDC) and a bottom dead centre (BDC) of the piston (4) inside the cylinder liner (13).

8. An inspection system (14) according to any of the preceding claims, wherein the elongated member (15) is extendable.

9. An inspection system (14) according to any of the preceding claims, comprising 3D scanning software.

10. An inspection system (14) according to any of the preceding claims, comprising computational means, preferably the computational means is integral with the 3D scanner means (18) or is an external computer that receives data acquired by operating the 3D scanner means (18) and being transmitted from the 3D scanner means (18) to the computational means for being executed by the computational means.

11. An inspection system (14) according to any of the preceding claims, comprising a monitor configured to display a representation of the surface topography of the interior cylinder liner wall (13), preferably in real time.

12. An inspection system (14) according to any of the preceding claims, wherein the 3D scanner means (18) is suspended to the elongated member (15) to be angular orientable towards any interior part or area of the cylinder liner (13), piston (4) or head cover (10) or components facing inside said cylinder liner (13).

13. A method of inspecting an interior wall of a cylinder liner (13) of a cylinder (1) of a four-stroke engine according to any of the preceding claims, the method comprises the steps of
a) Providing the inspection system (14) according to any of the preceding claims,
b) Arranging a piston (4) of the cylinder (1) at or above its bottom dead centre,
c) Removing a spark plug (12) of the cylinder (1) from its spark plug opening (11),
d) Inserting the inspection tool through the spark plug opening (11),
e) Activating the 3D scanner means (18), the reciprocating means and the rotation means and scanning one or more of at least a part of the interior wall of the cylinder liner (13), at least a part of the top surface of the piston (4), and any part of the cylinder head cover (10) facing the piston (4), including any components secured to or at the cylinder head cover (10) and facing inside the cylinder liner (13), and
f) Transmitting data obtained by the 3D scanner means from the 3D scanner means to the computational means.

14. A method according to claim 13, further comprising a step c1) between step c) and step d) of inserting a slide bushing means (21) in the spark plug opening (11).
